# EUROPÄISCHE PATENTANMELDUNG

(11) **EP 2 093 394 A1**
(43) Veröffentlichungstag der Anmeldung: **26.08.2009**
(21) Anmeldenummer: 09152004.9
(22) Anmeldetag: 04.02.2009
(51) Int. Cl.: F01M 1/16, F01M 1/08, F16N 25/02

(54) **Vorrichtung zur Schmierung von Zylindern**

(30) Priorität: 19.02.2008 EP 08151620
(71) Anmelder: Wärtsilä Schweiz AG, 8401 Winterthur (CH)
(72) Erfinder: Christensen, Ole, 8408, Winterthur (CH)
(74) Vertreter: Sulzer Management AG

(57) **Zusammenfassung**

Eine Vorrichtung zur Schmierung einer Lauffläche (17) eines Zylinders (6) einer Brennkraftmaschine umfasst eine Schmiermittelquelle (13) zum Bereitstellen des Schmiermittels, sowie einen Schmiermittelauslass (5,51,52), durch welchen das Schmiermittel auf die Lauffläche (17) aufbringbar ist, wobei das Schmiermittel von der Schmiermittelquelle (13) zum Schmiermittelauslass (5, 51, 52) förderbar ist. Zwischen der Schmiermittelquelle (13) und dem Schmiermittelauslass (5, 51, 52) sind ein Schaltorgan (1, 20, 101, 201, 301) und eine Kolbeneinheit (3, 103, 203) angeordnet, wobei die Kolbeneinheit (3, 103, 203) eine erste und zweite Kammer aufweist, welche durch einen beweglichen Kolben (4) getrennt sind. Das Schaltorgan (1, 20, 101, 201, 301) verbindet zwischen der Schmiermittelquelle (13) und dem Schmiermittelauslass (5, 51, 52) entweder die erste (11) oder die zweite (12) Kammer mit dem Schmiermittelauslass (5, 51, 52) verbindet.

## Beschreibung

Die Erfindung betrifft eine Vorrichtung zur Schmierung von Zylindern von Brennkraftmaschinen, insbesondere Grossdieselmotoren.

Aus dem Stand der Technik ist bekannt, eine hydraulisch angetriebene Pumpe in der Schmiermittelzuleitung vorzusehen, mittels welcher den Laufflächen eines Zylinders einer Brennkraftmaschine Schmiermittel zugeführt wird. Der mit dem Betrieb der hydraulischen Pumpe verbundene Aufwand ist verhältnismässig hoch, da die Pumpe an einen Kreislauf von Hydraulikfluid angeschlossen ist, welcher vom Schmiermittelkeislauf getrennt geführt werden muss, da sich Hydraulikfluid und Schmiermittel im Betrieb nicht vermischen dürfen. Insbesondere für Vorrichtungen, die für Grossdieselmotoren zum Einsatz kommen, muss die Pumpe einen Druck aufbauen. Um die Pumpe in ihrer Arbeit zu unterstützen, ist in dem Stand der Technik gemäss DE 199 59 300 A1 vorgeschlagen worden, eine Ausstosseinrichtung mit einer zugeordneten Betätigungsvorrichtung zwischen Pumpe und Schmiermittelauslass vorzusehen. Die Ausstosseinrichtung ist als Zylinder-Kolbenaggregat ausgebildet, wobei der Kolben der Ausstosseinrichtung mit dem Kolben der Betätigungseinrichtung verbunden ist, sodass sich eine einteilige Doppelkolbenanordnung ergibt. Der Kolben der Betätigungseinrichtung besitzt dabei einen grösseren Durchmesser als der Kolben der Ausstosseinrichtung, wodurch mit geringem Betriebsdruck eine hohe Ausstosskraft erreichbar ist.

Ein Nachteil dieser Lösung ist darin begründet, dass für die Bewegung des Kolbens der Betätigungsvorrichtung eine grosse Menge an Hydraulikmedium zur Verfügung stehen muss. Um diese relativ bedeutsame Menge an Hydraulikmedium bereitzustellen, ist es in den meisten Fällen erforderlich, dass ein oder mehrere Speicher vorhanden sein müssen. Diese Speicher sind einerseits aus Gründen des zum Einbau erforderlichen Bauraums und somit des erhöhten Platzbedarfs nachteilig. Andererseits benötigen derartige Speicher zumeist auch eine Versorgungseinheit für Inertgas unter Druck und Messvorrichtung zur Überwachung des Drucks des Hydraulikmediums sowie Regelungsmittel zur Einstellung des Betriebsdrucks. Die Lösung gemäss DE 199 59 300 A1 hat weiters den Nachteil, dass die Ausstosseinrichtung nur während des Druckhubes Schmiermittel fördert und somit die Rückstellung des Kolbens der Austosseinrichtung nicht zur Förderung von Schmiermittel genutzt werden kann. Mit dieser konventionellen Vorrichtung ist es daher zwar möglich, die Druckbelastung der vorgelagerten Pumpe zu vermindern, allerdings erfolgt die Zufuhr von Schmiermittel nur während des Druckhubs, sodass eine Erhöhung der Frequenz des Einspeisens von Schmiermittel in den Innenraum des Zylinders nur in begrenztem Ausmass möglich ist.

Aus der DE 91 15 265 U ist bekannt, eine Vorrichtung zur individuellen Versorgung von Schmierstellen vorzusehen. Die Vorrichtung umfasst eine Versorgungseinheit V und eine Schmiereinheit E.

Mittels eines Umsteuerorgans U werden die Zweileitungsverteiler der Schmiereinheit E mit einem Progressiv-Verteiler pro Zylinder verbunden. Der Progressiv-Verteiler ermöglicht die Zuteilung von Schmiermittel zu allen Schmiermittelauslässen. Der Zweileitungsverteiler umfasst eine Kolbeneinheit, umfassend einen Kolben, der in einer Dosierkammer frei beweglich ist. Die Dosierkammer wird durch den Kolben in zwei Teildosierkammern unterteilt, die mit einer definierten Menge an Schmiermittel befüllbar sind. Parallel zur Dosierkammer befindet sich im Gehäuse des Zweileitungsverteilers eine Steuerkammer, in der ein Steuerkolben eine Hin- und Herbewegung ausführen kann. Soll das Schmiermittel zu einer der Teildosierkammern zugeführt werden, wird durch das unter Druck stehende Schmiermittel zuerst der Steuerkolben in der Steuerkammer derart verschoben, dass eine Verbindung zu einer ersten Teildosierkammer freigegeben und Schmiermittel in die erste Teildosierkammer gepumpt wird. Der Kolben beginnt sich zu bewegen, wobei Schmiermittel aus der zweiten Teildosierkammer in Richtung eines Schmiermittelauslasses ausgeschoben wird. Der Steuerkolben enthält hierzu einen Abschnitt mit kleinerem Durchmesser, sodass eine Verbindung zwischen der zweiten Teildosierkammer und dem Schmiermittelauslass freigegeben ist. Der Steuerkolben muss ebenfalls beweglich in der Steuerkammer sein und ein Teil des Schmiermittels, welches in der Steuerkammer vorhanden sein muss, wird in einen Rücklaufkanal ausgeschoben. Dieses Schmiermittel wird somit als Hydraulikmedium im Kreislauf rückgeführt. Allerdings wird durch den Kreislauf das im System vorhandene Schmiermittelvolumen erhöht. Des weiteren ist es nachteilig, dass es durch das im Kreis geführte Schmiermittel zur Anreicherung von Verunreinigungen im Kreislaufstrom kommen kann.

Aufgabe der Erfindung ist es, eine Vorrichtung zur Schmierung von Zylinderoberflächen zu schaffen, die einfach aufgebaut ist, weniger Bauraum beansprucht, und eine präzise und schnelle Dosierung der Schmiermittelmenge zu einem genauen Zeitpunkt erlaubt.

Die Aufgabe wird mittels einer Vorrichtung zur Schmierung einer Lauffläche eines Zylinders einer Brennkraftmaschine gelöst, die eine Schmiermittelquelle zum Bereitstellen des Schmiermittels sowie einen Schmiermittelauslass umfasst, durch welchen das Schmiermittel auf die Lauffläche aufbringbar ist: Das Schmiermittel ist von der Schmiermittelquelle zum Schmiermittelauslass förderbar. Zwischen der Schmiermittelquelle und dem Schmiermittelauslass sind ein Schaltorgan und eine Kolbeneinheit angeordnet, wobei die Kolbeneinheit eine erste und zweite Kammer aufweist, welche durch einen beweglichen Kolben getrennt sind, wobei das Schaltorgan zwischen der Schmiermittelquelle und dem Kolbeneinheit entweder die erste oder die zweite Kammer mit dem Schmiermittelauslass verbindet. Auf einen Steuerkolben, wie er aus dem Stand der Technik bekannt ist, kann somit verzichtet werden. Hierdurch ergibt sich eine Vereinfachung der Vorrichtung im Vergleich zum Stand der Technik. Zudem ist die Antwortzeit der Vorrichtung auf eine Anfrage zur Zuführung von Schmiermittel zu der Lauffläche des Zylinders kürzer, da die Vorrichtung aus einer geringeren Anzahl von Einzelelementen besteht. Beispielsweise erübrigt es sich, Zeit für das Füllen des Steuerraums zur Verschiebung des Steuerkolbens vorzusehen. Sobald das Schaltorgan im Gegensatz zu dieser Ausführung nach dem Stand der Technik ein Signal zum Umschalten erhalten hat, wird das Umschalten des Schaltorgans veranlasst und Schmiermittel aus einer der beiden Kammern der Kolbeneinheit dem Schmiermittelauslass zugeführt und steht zur Schmierung der Lauffläche des Zylinders der Brennkraftmaschine bereit.

Ein weiterer Vorteil der erfindungsgemässen Vorrichtung ist darin begründet, dass die Zufuhr von Schmiermittel zu einem Schmiermittelauslass weniger Zeit beansprucht, als die Lösung gemäss des Standes der Technik, weil durch das Umschalten des Schaltorgans Schmiermittel direkt dem Schmiermittelauslass zugeführt wird. Somit kann auf den im Stand der Technik vorgesehenen Progressiv-Verteiler verzichtet werden. Ein derartiger Progressiv-Verteiler besteht aus einer Mehrzahl hydraulisch gesteuerter Kolben, die Schmiermittel von einem Zulauf auf eine Mehrzahl von Schmiermittelauslässen verteilt. Mittels einem auf dem Markt befindlichen Progressiv-Verteiler wird je ein Paar von Schmiermittelauslässen über eine Kolbeneinheit des Progressiv-Verteilers angesteuert. Für 8 Schmiermittelauslässe sind somit 4 Kolbeneinheiten erforderlich. Die Kolben dieser Kolbeneinheiten können, gesteuert mittels des Schmiermittels als Hydraulikmedium, nur langsam auf ein Signal reagieren, welches ein im Zylinder detektierter Schmiermittelbedarf auslöst. Da jeder der Kolben einige Millisekunden zu seiner Umsteuerung benötigt, und mehrere Kolben sequentiell zueinander angesteuert werden, werden diese Zeiten summiert. Für eine zeitgesteuerte Schmierung eines Zylinders einer Brennkraftmaschine, insbesondere eines Grossdieselmotors hat sich somit der Progressiv-Verteiler als nachteilig erwiesen.

Da auf einen Steuerkolben verzichtet werden kann, ist zudem die Menge des im System befindlichen Schmiermittels verringert.

Für den Betrieb des Steuerkolbens gemäss des Standes der Technik ist es zudem erforderlich, einen Teil des Schmiermittels in einen Rücklaufkanal zurückzuführen. Diese Rückführung kann auch als Bypassstrom angesehen werden. Ein derartiger Bypassstrom kann im Betrieb der Vorrichtung Probleme bereiten, da sich Verunreinigungen in dem Kreislauf ansammeln können, der den Bypassstrom enthält. In diesem Fall müsste vorgesehen werden, das Schmiermittel periodisch zu ersetzen, um zu vermeiden, dass derartige Verunreinigungen negative Auswirkungen auf die Qualität des Schmiermittels sowie den Betrieb der Vorrichtung haben.

Vorteilhafterweise sind beide Kammern mit Schmiermittel befüllbar, sodass auf Dichtmittel verzichtet werden kann. Wenn eine kleine Menge an Schmiermittel von der ersten Kammer in die zweite Kammer gelangt, kann der Schmiermittelfilm an der Innenwand der ersten oder zweiten Kammer zur Schmierung des darin entlang gleitenden Kolbens verwendet werden.

Die erste Kammer ist mit der Schmiermittelquelle verbunden und die zweite Kammer mit dem Schmiermittelauslass, wenn das Schaltorgan eine erste Stellung einnimmt. Die zweite Kammer ist mit dem Schmiermittelauslass verbunden und die erste Kammer mit der Schmiermittelquelle, wenn das Schaltorgan eine zweite Stellung einnimmt. Somit können bei jedem Hub des Kolbens der Kolbeneinheit ein oder mehrere Schmiermittelauslässe mit Schmiermittel versorgt werden. Mittels des Schaltorgans kann der genaue Zeitpunkt des Umschaltens von der ersten in die zweite Stellung oder umgekehrt festgelegt werden, sodass der Zeitpunkt des Austritts des Schmiermittels durch den Schmiermittelauslass auf die Lauffläche gesteuert werden kann.

Das Schaltorgan kann eine Ruhestellung einnehmen, sodass die Verbindung zwischen der Schmiermittelquelle und dem Schmiermittelauslass unterbrochen ist. In der Ruhestellung kann der Kolben der Kolbeneinheit in einer Endstellung verweilen. Befindet sich einer der Kolben in seiner Endstellung, ist das Volumen einer Kammer null. Die Vorrichtung fördert dann so lange kein Schmiermittel mehr zu der Lauffläche, bis das Schaltorgan umschaltet, sodass die Kammer wieder mit Schmiermittel von der Schmiermittelquelle versorgt werden kann.

Das Schaltorgan umfasst nach einem bevorzugten Ausführungsbeispiel ein Mehrwegventil. Unter einem Mehrwegventil ist eine Vorrichtung zu verstehen, welche einen Fluideinlass wahlweise mit verschiedenen Fluidauslässen verbinden kann. Nach einem Ausführungsbeispiel ist das Mehrwegventil als ein zylinderförmiger Körper ausgebildet, der in einem Hohlraum bewegbar ist. Der zylinderförmige Körper enthält eine Mehrzahl von Kanälen für Schmiermittel. Der Hohlraum enthält Bohrungen, über welche Schmiermittel von der Schmiermittelquelle zu den Kanälen des zylinderförmigen Körpers geleitet werden kann und von dort wieder zu einer Mehrzahl von Verbrauchern. Als Verbraucher kann beispielsweise ein Schmiermittelauslass oder eine Kammer einer Kolbeneinheit verstanden werden. Befindet sich der zylinderförmige Körper in einer ersten Stellung, ist ein erster Kanal von der Schmiermittelquelle zu der ersten Kammer der Kolbeneinheit geöffnet, sodass die erste Kammer mit Schmiermittel befüllt wird. Befindet sich der zylinderförmige Körper in einer zweiten Stellung, ist ein zweiter Kanal von der Schmiermittelquelle zur zweiten Kammer der Kolbeneinheit geöffnet, sodass die zweite Kammer mit Schmiermittel befüllt wird. Die Kanäle auf dem zylinderförmigen Körper und die Bohrungen im Hohlraum können durch Translation oder Drehbewegung des zylinderförmigen Körpers relativ zum Hohlraum miteinander in Übereinstimmung gebracht werden.

Zwischen der Schmiermittelquelle und dem Schaltorgan kann eine Fördereinrichtung, insbesondere eine Pumpe, angeordnet sein, damit das Schmiermittel den notwendigen Förderdruck aufweist, um durch den Schmiermittelauslass auf die Lauffläche des Zylinders aufgebracht zu werden. Die Fördereinrichtung kann auch eine Mehrzahl von Pumpen umfassen, welche aus Gründen der Betriebssicherheit oder aus Wartungsgründen vorgesehen sein können.

Andererseits besteht die Möglichkeit, dass zwischen der Schmiermittelquelle und dem Schaltorgan ein Common-rail Speicher angeordnet ist, um ein Schmiermittel mit dem nötigen Förderdruck bereitzustellen. Ein derartiger Common-rail Speicher kann vorgesehen sein, wenn Schmiermittel von verschiedenen Verbrauchern benötigt wird, somit permanent eine grössere Schmiermittelmenge unter Druck für die Versorgung aller Verbraucher zur Verfügung steht. Ein weiterer Vorteil der Verwendung eines Common-rail Speichers besteht darin, dass durch das Vorhandensein einer grösseren Schmiermittelmenge unter Druck Druckschwankungen besser ausgeglichen werden und daher ein stabilerer Betrieb der Vorrichtung zur Schmierung der Zylinder der Brennkraftmaschine möglich ist.

Das Schmiermittel kann von der Schmiermittelquelle zu einer Mehrzahl von Schmiermittelauslässen gefördert werden. Auf der Lauffläche des Zylinders können eine Mehrzahl Schmiermittelauslässen angeordnet sein, die gleichmässig über den Umfang des Zylinders verteilt sind. Insbesondere für eine Verwendung der Vorrichtung zur Schmierung von Grossdieselmotoren, ist eine Mehrzahl von Schmiermittelauslässen erforderlich, um das Schmiermittel als Schmierfilm mit einer gleichmässigen Dicke auf die Lauffläche aufzubringen.

Ein zweites Schaltorgan kann zwischen dem ersten Schaltorgan und dem Schmiermittelauslass vorgesehen sein, um Schmiermittel wahlweise zu einem ersten Schmiermittelauslass oder einem zweiten Schmiermittelauslass zu leiten. Diese Variante ist vorteilhaft, wenn verschiedene Schmiermittelauslässe zu verschiedenen Zeitpunkten mit Schmiermittel versorgt werden sollen.

Zwischen dem Schaltorgan und dem Schmiermittelauslass kann ein Absperrmittel vorgesehen sein, mittels welchem eine Verbindung zum Schmiermittelauslass freigebbar ist, wenn der Förderdruck des Schmiermittels einen Schwellwert übersteigt, sodass Schmiermittel zum Schmiermittelauslass förderbar ist. Ein derartiges Absperrmittel kann als Rückschlagventil ausgebildet sein. Der Schwellwert liegt zwischen 1 und 500 bar, insbesondere 1 und 250 bar, vorzugsweise zwischen 10 und 50 bar.

Mittel zur Veränderung des Volumens der Kammern können vorgesehen sein, wobei insbesondere eine Abmessung, wie beispielsweise die Länge, oder die Endstellung des Kolbens der Kolbeneinheit wählbar ist, sodass die Menge an Schmiermittel in jeder der beiden Kammern veränderbar ist. Diese Massnahme erlaubt den Einsatz der Vorrichtung für verschiedene Anwendungsbereiche, in denen unterschiedliche Mengen an Schmiermittel benötigt werden.

Nach einer vorteilhaften Ausgestaltung der Vorrichtung kann ein Regelungssystem vorgesehen sein, mittels welchem das Schaltorgan derart ansteuerbar ist, sodass aufgrund von Messdaten betreffend den Betriebszustand der Brennkraftmaschine der Zeitpunkt der Öffnung der Verbindung zum Schmiermittelauslass festlegbar ist.

Die Vorrichtung kann insbesondere zur Schmierung der Laufflächen eines Zylinders eines Grossdieselmotors verwendet werden.

Ein weiterer Vorteil der erfindungsgemässen Vorrichtung besteht darin, dass eine Vermischung von Schmiermittel mit Hydraulikflüssigkeiten ausgeschlossen ist, da in der Vorrichtung das Schmiermittel selbst als Fördermittel Verwendung findet. Somit kann auf Dichtmittel, welche in verschiedensten konventionellen Vorrichtungen zum Schmieren von Zylindern verwendet werden müssen, verzichtet werden.

Die Vorrichtung arbeitet nach dem Prinzip, eine durch geometrische Randbedingungen bestimmte Schmiermittelmenge periodisch einem Verbraucher zuzuführen. Diese geometrischen Randbedingungen ergeben sich aus dem Volumen der beiden Kammern der Kolbeneinheit. Dieses Volumen kann beispielsweise durch die Wahl der Abmessungen, insbesondere der Länge, des Kolbens oder der gewünschten Endstellung des Kolbens verändert werden. Diese geometrischen Randbedingungen bestehen weitgehend unabhängig von den physikalischen und chemischen Eigenschaften des Schmiermittels. Die Temperatur des Schmiermittels sowie dessen Viskosität haben auf die mittels der erfindungsgemässen Vorrichtung bestimmten Schmiermittelmenge allenfalls untergeordneten Einfluss. Auf teure Einrichtungen zur Beheizung oder Kühlung des Schmiermittels kann demzufolge verzichtet werden.

Durch die einfache Ausgestaltung der Vorrichtung bleibt die Anzahl an beweglichen Teilen gering. Auf Federvorrichtungen, die im Stand der Technik zur Rückstellung von Kolben einer Fördereinrichtung verwendet werden, kann verzichtet werden, sodass die Vorrichtung robust und zuverlässig arbeitet.

Da zumindest 2 Einspritzungen pro Motorzyklus vorgenommen werden können, weil der Kolben der Kolbeneinheit doppeltwirkend arbeitet, kann die Frequenz der Einspritzung von Schmiermittel auf die Lauffläche erhöht werden. Folglich kann der Lauffläche des Zylinders eine grössere Schmiermittelmenge pro Motorzyklus zugeführt werden, sodass die Schmiermittelmenge, bezogen auf die Schmiermittelmenge, die gemäss DE 199 59 300 A1 der Lauffläche zuführbar ist, verdoppelt wird.

Des weiteren ist es möglich, mit der erfindungsgemässen Vorrichtung die von der Vorrichtung benötigte Anzahl an Schmiermittelspeichern zumindest zu reduzieren oder auf Schmiermittelspeicher sogar gänzlich zu verzichten, weil die zum Betrieb der Vorrichtung benötigte Schmiermittelmenge gering ist. Unter der benötigten Schmiermittelmenge wird dabei die in der Kolbeneinheit, sowie in den Leitungen von der Schmiermittelquelle bis zum Schmiermittelauslass enthaltene Schmiermittelmenge verstanden. Ein Schmiermittelspeicher ist hierbei als ein Behälter zu verstehen, in welchem Schmiermittel unter Druck vorrätig gehalten wird, um bei Bedarf dem Verbraucher zugeführt zu werden. Um das Schmiermittel in diesem Behälter unter Druck zu halten, wird es zumeist mit einem Inertgas beaufschlagt. Muss ein derartiges Inertgas verwendet werden, impliziert dessen Verwendung das Vorsehen eines Inertgaskreislaufs, wobei eine Vorrichtung zur Erzeugung und Aufrechterhaltung des Drucks des Inertgases, sowie zum Einstellen einer gewünschten Arbeitstemperatur vorzusehen sind.

Aufgrund der geringen benötigten Schmiermittelmenge kann die Vorrichtung auch an eine zentrale Schmiermittelversorgungseinheit angeschlossen sein, in welchem das Schmiermittel unter Druck vorrätig gehalten wird, wie beispielsweise einen Common-rail -Speicher. Der Common-rail -Speicher ist ein Schmiermittelspeicher welcher der Versorgung aller Schmierstellen der Vorrichtung dient, sowie allfälliger weiterer Schmierstellen der Brennkraftmaschine oder des Fahrzeugs oder Schiffs, welches mit der Brennkraftmaschine angetrieben wird. Im Unterschied zu den Schmiermittelspeichern, die dem Ausgleich von Druckschwankungen in den Schmiermittelleitungen dienen sollen, dient der Common-rail Speicher der Bevorratung einer grossen Schmiermittelmenge unter Druck. Der Common-rail Speicher kann somit als eine unter Druck stehende Schmiermittelquelle angesehen werden.

Eine Vorrichtung nach einem der vorher beschriebenen Ausführungsbeispiele kann ein Element zum Verschieben des Schaltorgans von der ersten Stellung in die zweite Stellung oder umgekehrt umfassen, das ein Umschalten zwischen der ersten und der zweiten Stellung zu einem beliebigen Zeitpunkt ermöglicht. Hierdurch können unterschiedliche Anforderungen an die Schmierung bei unterschiedlichen Betriebszuständen sowie an verschiedenen Schmiermittelauslässen individuell berücksichtigt werden.

Einige besonders vorteilhafte Ausführungsbeispiele sollen anhand der nachstehenden Zeichnungen näher beschrieben werden.
Fig. 1 zeigt ein erstes Ausführungsbeispiel der erfindungsgemässen Vorrichtung
Fig. 2a zeigt eine erste Variante eines zweiten Ausführungsbeispiel der erfindungsgemässen Vorrichtung
Fig. 2b zeigt eine zweite Variante des zweiten Ausführungsbeispiel der erfindungsgemässen Vorrichtung
Fig. 3 zeigt ein weiteres Ausführungsbeispiel für ein Mehrwegventil
Fig. 4 zeigt ein Ausführungsbeispiel für eine Vorrichtung zur Bereitstellung von Schmiermittel zu zwei Schmiermittelauslässen.

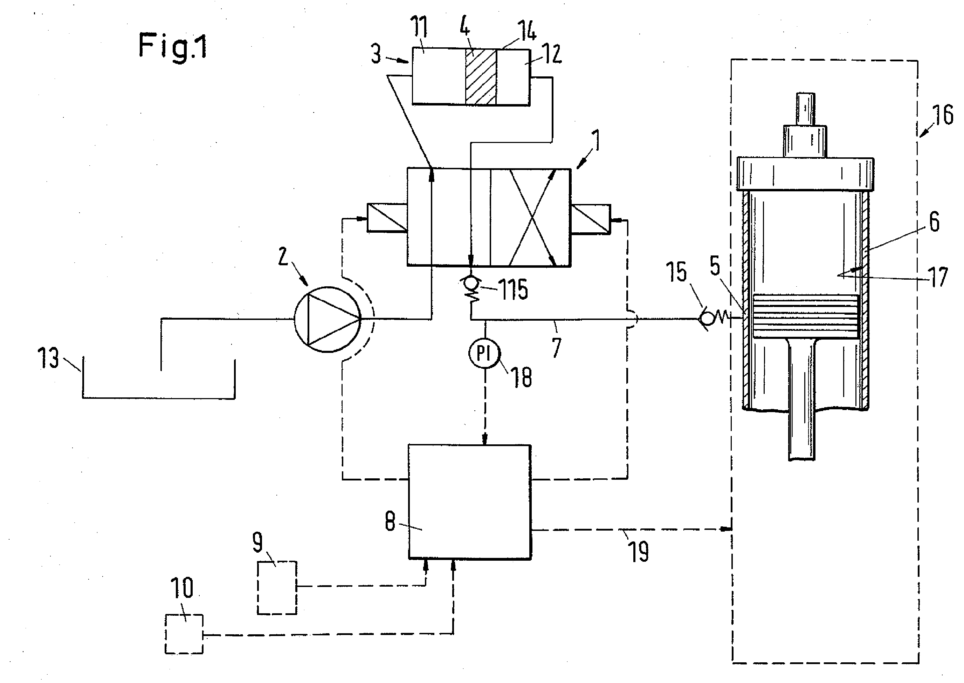

Die erfindungsgemässe Vorrichtung gemäss Fig. 1 umfasst eine Schmiermittelquelle 13, die als Schmiermittelreservoir ausgebildet sein kann und mittels welcher ein Schmiermittel bereitgestellt wird. Mit der Schmiermittelquelle 13 ist eine Fördereinrichtung 2 verbunden, mittels welcher eine Förderung des Schmiermittels von der Schmiermittelquelle zu einem Verbraucher erfolgt. Als Verbraucher ist ein Schmiermittelauslass 5 gezeigt, der beispielsweise eine Schmiermitteldüse umfassen kann, mittels welcher das Schmiermittel dem zu schmierenden System, in dem dargestellten Fall einer Lauffläche eines Zylinders 6 einer Brennkraftmaschine 16, zugeführt wird. Anstatt einer Fördereinrichtung kann ein Common-Rail Speicher vorgesehen sein, welcher das Schmiermittel bereits unter ausreichendem Druck enthält, sodass das Schmiermittel bei Bedarf dem betreffenden Verbraucher zugeführt werden kann. Unter Druck stehendes Schmiermittel wird durch die Pumpe 2 oder von dem Common-rail Speicher einer ersten Kammer 11 einer Kolbeneinheit 3 zugeführt. Der Druck des Schmiermittels am Ausgang der Pumpe 2 oder des Common-Rail Speichers beträgt zwischen 1 und 500 bar, insbesondere 1 und 250 bar, vorzugsweise zwischen 10 und 50 bar. Die Kolbeneinheit ist mit einem vorzugsweise zylinderförmigen Innenraum 14 ausgestattet, welcher durch einen frei beweglichen Kolben 4 in zwei Kammern (11,12) unterteilt wird. Befindet sich der Kolben 4 in seiner ersten Endstellung, enthält die erste Kammer 11 eine definierte Schmiermittelmenge, während die zweite Kammer 12 kein Schmiermittel enthält. Wird ein Schaltorgan 1, welches in Fig. 1 als Mehrwegventil dargestellt ist, insbesondere als ein hydraulisches 4-Wege Ventil, von seiner ersten in eine zweite Stellung verschoben, wird das unter Druck stehende Schmiermittel, welches über die Pumpe 2 zugeführt wird, in die zweite Kammer 12 der Kolbeneinheit 3 eingespeist. Der frei bewegliche Kolben 4 wird hierdurch in seine zweite Endstellung verschoben. Das in der ersten Kammer 11 befindliche Schmiermittel wird in Richtung des Schmiermittelauslass 5 ausgeschoben. Der Schmiermittelauslass 5 kann eine in einer Lauffläche 17 eines Zylinders 6 einer Brennkraftmaschine befindliche Schmiermitteldüse umfassen, die an sich bekannt ist und zeichnerisch nicht dargestellt ist. Von den Kammern (11,12) führt je eine Schmiermittelleitung zu dem Schaltorgan. Vom Schaltorgan führt eine weitere Schmiermittelleitung 7 zu dem Verbraucher, also der zu schmierenden Lauffläche 17. In der Schmiermittelleitung 7 kann ein Absperrmittel 15 vorgesehen sein, welches öffnet, wenn der Druck des Schmiermittels in der Schmiermittelleitung 7 einen Schwellwert überschritten hat. Das Absperrmittel 15 ist insbesondere als Rückschlagventil ausgebildet. Eine Mehrzahl von Absperrmitteln (15, 115) kann vorgesehen sein, wenn die Kolbeneinheit 4 und der Schmiermittelauslass 5 weit voneinander entfernt angeordnet sind.

Das Volumen der ersten und zweiten Kammer (11,12) und somit die darin enthaltene Schmiermittelmenge wird auf der Grundlage der vom Verbraucher benötigten Schmiermittelmenge bestimmt. Die Frequenz der Schmiermittelzufuhr zum Verbraucher ist ebenfalls mitbestimmend für die Auslegung des Volumens der beiden Kammern. Der Durchmesser des zylinderförmigen Innenraums 14 und demzufolge des Kolbens 4 sowie des von der Pumpe 2 zu erreichenden Förderdrucks wird in Abhängigkeit des verbraucherseitigen Maximaldrucks bestimmt, in diesem Fall dem Druck, der an der Lauffläche 17 des Zylinders 6 der Brennkraftmaschine in der Höhe des Schmiermittelauslasses 5 herrscht, unter Berücksichtigung des Druckverlustes der Schmiermittelleitung 7 sowie des Schmiermittelauslasses 5 und allfälliger in der Schmiermittelleitung angeordneter Absperrmittel 15.

Die Kapazität der Pumpe 2 wird auf der Grundlage der Anzahl der Mehrwegventile 1 bestimmt sowie der gewünschten Einspritzdauer des Schmiermittels, das heisst der Dauer der Bewegung des Kolbens von seiner ersten Endstellung in seine zweite Endstellung und umgekehrt, sowie der Eigenschaften des Mehrwegventils. Je höher der von der Pumpe 2 bereitgestellte Druck ist, desto mehr kann die Einspritzdauer reduziert werden.

Im allgemeinen wird für jeden Zylinder von Grossdieselmotoren mehr als ein Schmiermittelauslass 5 pro Zylinder 6 vorgesehen, um eine ausreichende Schmierung entlang des Umfangs des Zylinders zu gewährleisten. Um dieser Anforderung zu genügen, wird eine Mehrzahl an Mehrwegventilen 1 und zugehörigen Kolbeneinheiten 3 vorgesehen, wobei die Mehrwegventile in einem gemeinsamen Gehäuse untergebracht sein können. Vorteilhafterweise sind die Mehrwegventile gemeinsam mit der Kolbeneinheit in einem gemeinsamen Gehäuse als Block untergebracht.

Die Vorrichtung zur Schmierung ist an ein Regelungssystem angeschlossen, welches einen Regler 8 umfasst, welcher einen automatischen Reglereingang 9 sowie einen manuellen Reglereingang 10 aufweist. Der Reglereingang 9 erhält in Echtzeit automatisch Eingangssignale, welche Informationen über die Geschwindigkeit des Motors sowie dessen Last enthalten. Zusätzlich können die Lage der Kurbelwelle oder andere Systemparameter abgerufen werden. Anhand der Motorgeschwindigkeit sowie der Last wird von einer zum Regler 8 gehörigen Zentraleinheit der Zeitpunkt des Einspritzens von Schmiermittel auf die Lauffläche ermittelt. Hierzu wird zu diesem Zeitpunkt ein Steuersignal an das Mehrwegventil 1 geschickt. Das Steuersignal bewirkt ein Umschalten des Mehrwegventils, sodass Schmiermittel aus der betreffenden Kammer (11,12) der Kolbeneinheit 4 austreten kann und durch die Schmiermittelleitung 7 zum Schmiermittelauslass 5 gelangt. Erhält das Mehrwegventil 1 vom Regler 8 ein Signal zum Umschalten, wird das Mehrwegventil elektronisch, mechanisch, beispielsweise durch Federkraft oder über Nocken, magnetisch, elektromagnetisch, pneumatisch oder hydraulisch umgeschaltet. Um die Funktion der Vorrichtung zu überwachen, kann in der Schmiermittelleitung 7 ein Mittel zur Messung des Drucks, beispielsweise ein Drucksensor 18 angebracht sein. Mittels des Drucksensors 18 kann auch der Zeitpunkt des Umschaltens des Mehrwegventils 1 überprüft werden. Wenn das Mehrwegventil umschaltet, hat dies einen Druckimpuls zur Folge, den der Drucksensor 18 registriert. Ein Signal, welches dem Druckimpuls entspricht, wird dem Regler 8 zugeführt, welcher dem Druckimpuls einen Zeitwert zuordnet. Der Zeitwert wird mit dem Zeitpunkt der planmässigen Zufuhr von Schmiermittel zum Schmiermittelauslass 5 verglichen. Bei Feststellung einer Abweichung kann der Zeitpunkt des Umschaltens des Mehrwegventils entsprechend angepasst werden. Der Regler 8 kann auch Ausgangssignale 19 zum Motorregelungssystem oder Diagnostik- oder Alarmsystem senden, um Informationen über den Betriebszustand der Vorrichtung zu übermitteln und Fehlfunktionen oder Unregelmässigkeiten aufzuzeigen. Zudem kann eine Anweisung an das Motorregelungssystem übermittelt werden, die Geschwindigkeit des Motors zu drosseln, wenn Fehlfunktionen diagnostiziert worden sind.

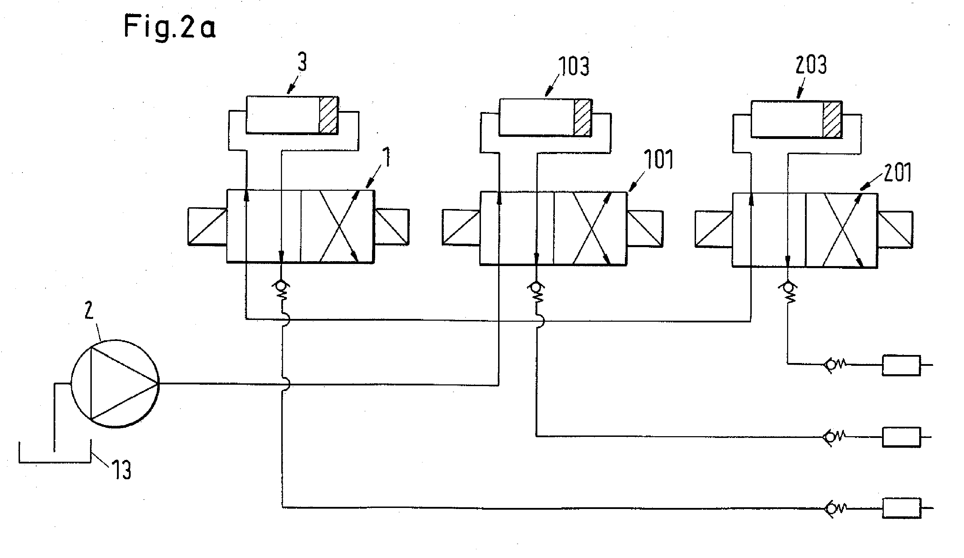

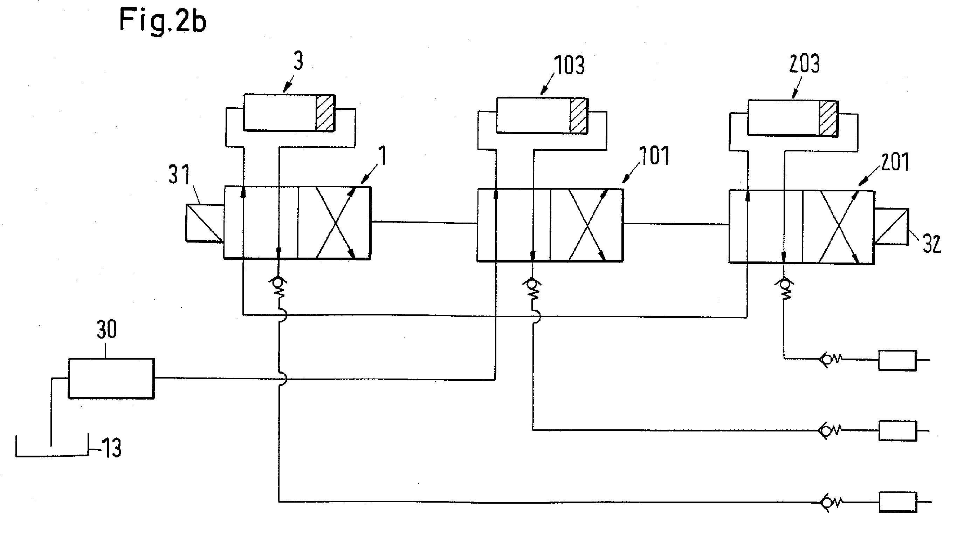

Fig. 2a zeigt ein zweites Ausführungsbeispiel der erfindungsgemässen Vorrichtung. Nach dieser Vorrichtung gem. Fig. 2 versorgt eine einzige Fördereinrichtung 2 eine Mehrzahl von Kolbeneinheiten (3, 103, 203) über eine Mehrzahl von Schaltorganen (1, 101, 201). Der Aufbau der Vorrichtung unterscheidet sich ansonsten nicht vom vorhergehenden Ausführungsbeispiel. Anstatt der Fördereinrichtung 2 kann auch ein Common-rail Speicher 30 vorgesehen sein, was in Fig. 2b schematisch gezeigt ist. Zusätzlich werden gemäss Fig. 2b die Mehrwegventile vorteilhafterweise in einem gemeinsamen Gehäuse als Block untergebracht. Hierdurch ist es möglich, die Mehrwegventile in kompakter Bauweise anzuordnen und Umschaltvorrichtungen (31,32) vorzusehen, die mehrere Mehrwegventile in zeitlicher Reihenfolge hintereinander ansteuern können. Beispielsweise wird das Mehrwegventil 1 angesteuert und Schmiermittel in die erste Kammer 11 der Kolbeneinheit 3 gefördert, sowie Schmiermittel von der zweiten Kammer 12 der Kolbeneinheit 3 zu einem Verbraucher, insbesondere einem Schmiermittelauslass auf der Lauffläche eines ersten Zylinders der Brennkraftmaschine gefördert. Die Einspritzung erfolgt dann bei einer durch den Kurbelwinkel definierten Stellung des Kolbens, welcher in dem Zylinder bewegbar ist. Nach dem Ablauf einer in der Umschaltvorrichtung gespeicherten Zeitspanne wird das Mehrwegventil 101 betätigt. Schmiermittel wird in die erste Kammer der Kolbeneinheit 103 gefördert. Gleichzeitig wird Schmiermittel von der zweiten Kammer der Kolbeneinheit 103 zu einem weiteren Schmiermittelauslass auf der Lauffläche eines zweiten Zylinders der Brennkraftmaschine gefördert. Die Zeitspanne ist so bemessen, dass die Einspeisung oder das Einspritzen von Schmiermittel auf die Lauffläche vorzugsweise beim gleichen Kurbelwinkel erfolgt. Für jeden weiteren Zylinder der Brennkraftmaschine kann in analoger Weise eine derartige Zeitspanne ermittelt werden. Die zeitliche Abfolge des Umschaltens der Mehrwegventile kann auch in einer Speichereinheit eines Reglers gespeichert sein. Der Regler sendet ein Signal zum Umschalten an die entsprechende Umschaltvorrichtung des betroffenen Magnetventils oder an die gemeinsame Umschaltvorrichtung für die im gemeinsamen Gehäuse als Block untergebrachten Magnetventile. Der Regler kann im übrigen ähnlich wie der Regler 8 der Fig. 1 aufgebaut sein, ist aber in Fig. 2b nicht näher dargestellt. Alternativ dazu kann auch eine Umschaltvorrichtung eine Mehrzahl von Mehrwegventilen gleichzeitig ansteuern, wenn mehrere Verbraucher gleichzeitig mit Schmiermittel versorgt werden sollen. Die Umschaltvorrichtungen aller Ausführungsbeispiele können elektronisch, mechanisch, beispielsweise durch Federkraft oder über Nocken, magnetisch, elektromagnetisch, pneumatisch oder hydraulisch angesteuert werden.

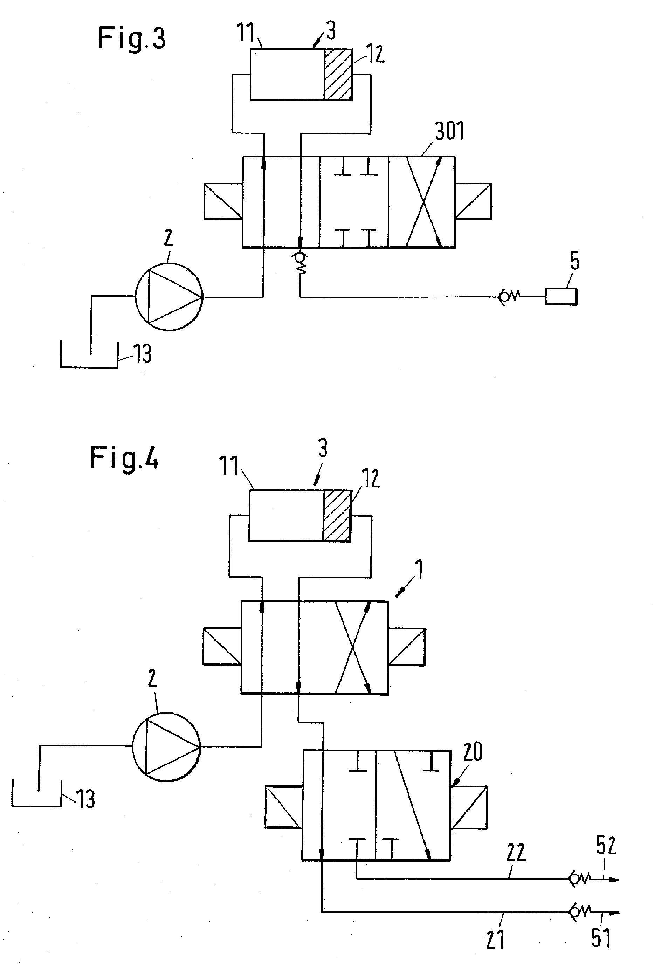

Fig. 3 zeigt ein weiteres Ausführungsbeispiel für ein Schaltorgan 301, welches als Mehrwegventil ausgebildet ist. Der Aufbau des Mehrwegventils 301 unterscheidet sich von den vorherigen Varianten dadurch, dass es in eine Ruhestellung verschiebbar ist, in welcher die Verbindung zu jeder der beiden Kammern (11,12) der Kolbeneinheit 3 unterbrochen ist. Befindet sich das Mehrwegventil in der Ruhestellung, wird kein Schmiermittel durch die Schmiermittelleitung 7 zum Schmiermittelauslass 5 gefördert. In der Fig. 3 ist diese Ruhestellung als ein Zustand gezeigt, in welchem die Verbindung der Pumpe 2 zu der Kammer 11 der Kolbeneinheit 3 und die Verbindung der Kammer 12 der Kolbeneinheit 3 zum Schmiermittelauslass 5 unterbrochen ist. Diese Variante ist vorteilhaft, wenn wenig Schmiermittel vom Verbraucher benötigt wird, das heisst, wenn beispielsweise für die benötigte Schmiermittelmenge eine einfach wirkende Kolbeneinheit ausreichend wäre. Wird die Brennkraftmaschine häufig nur unter Teillast betrieben, ist die benötigte Schmiermittelmenge stark reduziert. Daher ist unter Umständen pro Umdrehung der Kurbelwelle nur ein einziger Einspritzvorgang von Schmiermittel vonnöten, sodass nur die Schmiermittelmenge einer der Kammern benötigt wird. Als Alternative zu dem Ausführungsbeispiel gemäss Fig. 3 kann eine Ruhestellung auch erhalten werden indem das Mehrwegventil nicht umschaltet. Die Pumpe 2 fördert in den Kolbenraum 11, bis eine nicht dargestellte Überdrucksicherung eine Abzweigung zu der Schmiermittelquelle freigibt. Solange der maximale Förderdruck auf den Kolben 4 wirkt, verbleibt der Kolben 4 in seiner Endstellung. Somit wird kein Schmiermittel zum Schmiermittelauslass gefördert, bis das Mehrwegventil (1, 101, 201, 301) umschaltet. Das Mehrwegventil kann nach jedem der in den Figuren dargestellten Ausführungsbeispiele ausgestaltet sein.

Fig. 4 zeigt ein Ausführungsbeispiel für eine Vorrichtung um Schmiermittel wahlweise zu dem Schmiermittelauslass (51) oder einem zweiten Schmiermittelauslass (52) zu leiten. Diese Variante ist vorteilhaft, wenn das Schmiermittel wahlweise in verschiedene Schmiermittelleitungen gefördert werden soll. Stromabwärts des Mehrwegventils 1 ist ein weiteres Schaltorgan 20 angeordnet. Bei Betätigung dieses Schaltorgans wird wahlweise eine Verbindung zu der Schmiermittelleitung 21 und einer weiteren Schmiermittelleitung 22 freigegeben. Hierdurch können mehrere Schmiermittelauslässe (51, 52) mit Schmiermittel versorgt werden, die sich auf der Lauffläche 17 in verschiedenen Höhen oder Winkelabständen befinden oder auch eine Mehrzahl von Zylindern mit Schmiermittel versorgt werden.

In einer nicht dargestellten Variante können auch Kolbeneinheiten (3, 103, 203) von einer Fördereinrichtung 2 oder eines Common-rail Speichers versorgt werden, deren Innenräume unterschiedliche Grösse aufweisen, sodass das Volumen der Kammern der Kolbeneinheiten sich voneinander unterscheidet. Die Kolbeneinheiten kommen je nach Schmiermittelbedarf zum Einsatz. Da die Kolbeneinheiten konstruktiv einfach herstellbar sind und wenig Bauvolumen benötigen, kann ein Teil der Kolbeneinheiten nur bei Vollast zugeschaltet werden.

## Patentansprüche

1. Vorrichtung zur Schmierung einer Lauffläche (17) eines Zylinders (6) einer Brennkraftmaschine umfassend eine Schmiermittelquelle (13) zum Bereitstellen des Schmiermittels sowie einen Schmiermittelauslass (5,51,52), durch welchen das Schmiermittel auf die Lauffläche (17) aufbringbar ist, wobei das Schmiermittel von der Schmiermittelquelle (13) zum Schmiermittelauslass (5,51,52) förderbar ist, wobei zwischen der Schmiermittelquelle (13) und dem Schmiermittelauslass (5,51,52) ein Schaltorgan (1, 20, 101, 201, 301) und eine Kolbeneinheit (3, 103, 203) angeordnet sind, wobei die Kolbeneinheit (3,103,203) eine erste (11) und zweite Kammer (12) aufweist, welche durch einen beweglichen Kolben (4) getrennt sind, **dadurch gekennzeichnet, dass** das Schaltorgan (1, 20, 101, 201, 301) zwischen der Schmiermittelquelle (13) und der Kolbeneinheit (3, 103, 203) angeordnet ist und entweder die erste (11) oder die zweite Kammer (12) mit dem Schmiermittelauslass (5,51,52) verbindet.

2. Vorrichtung nach Anspruch 1, wobei beide Kammern (11,12) mit Schmiermittel befüllbar sind.

3. Vorrichtung nach Anspruch 2, wobei die erste Kammer (11) mit der Schmiermittelquelle (13) verbunden ist und die zweite Kammer (12) mit dem Schmiermittelauslass (5,51,52) verbunden ist, wenn das Schaltorgan (1, 20, 101, 201, 301) eine erste Stellung einnimmt oder wobei die zweite Kammer (12) mit dem Schmiermittelauslass (5,51,52) verbunden und die erste Kammer (11) mit der Schmiermittelquelle (13) verbunden ist, wenn das Schaltorgan (1, 20, 101, 201, 301) eine zweite Stellung einnimmt.

4. Vorrichtung nach einem der vorhergehenden Ansprüche, wobei das Schaltorgan (1, 20, 101, 201, 301) eine Ruhestellung einnehmen kann, sodass die Verbindung zwischen der Schmiermittelquelle (13) und dem Schmiermittelauslass (5,51,52) unterbrochen ist.

5. Vorrichtung nach einem der Ansprüche 3 oder 4, wobei das Schaltorgan (1, 20, 101, 201, 301) ein Mehrwegventil umfasst.

6. Vorrichtung nach einem der vorhergehenden Ansprüche 3 bis 5, wobei zwischen der Schmiermittelquelle (13) und dem Schaltorgan (1, 20, 101, 201, 301) eine Fördereinrichtung (2), insbesondere eine Pumpe angeordnet ist.

7. Vorrichtung nach einem der vorhergehenden Ansprüche 3 bis 5, wobei zwischen der Schmiermittelquelle (13) und dem Schaltorgan (1, 20, 101, 201, 301) ein Common-rail Speicher angeordnet ist.

8. Vorrichtung nach einem der vorhergehenden Ansprüche 3 bis 7, wobei das Schmiermittel von der Schmiermittelquelle (13) zu einer Mehrzahl von Schmiermittelauslässen (5,51,52) förderbar ist.

9. Vorrichtung nach Anspruch 8, wobei ein zweites Schaltorgan (20) zwischen dem ersten Schaltorgan (1, 101, 201, 301) und dem Schmiermittelauslass (5) vorgesehen ist, um Schmiermittel wahlweise zu einem ersten Schmiermittelauslass (51) oder einem zweiten Schmiermittelauslass (52) zu leiten.

10. Vorrichtung nach einem der vorhergehenden Ansprüche, wobei zwischen dem Schaltorgan (1, 20, 101, 201, 301) und dem Schmiermittelauslass (5, 51, 52) ein Absperrmittel (15) vorgesehen ist, mittels welchem eine Verbindung zum Schmiermittelauslass (5, 51, 52) freigebbar ist, wenn der Förderdruck des Schmiermittels einen Schwellwert übersteigt, sodass Schmiermittel zum Schmiermittelauslass (5,51,52) förderbar ist.

11. Vorrichtung nach Anspruch 10, wobei der Schwellwert zwischen 1 und 500 bar, insbesondere 1 und 250 bar, vorzugsweise zwischen 10 und 50 bar liegt.

12. Vorrichtung nach einem der vorhergehenden Ansprüche, wobei Mittel zur Veränderung des Volumens der Kammern (11,12) vorgesehen sind, insbesondere eine Abmessung oder die Endstellung des Kolbens (4) der Kolbeneinheit (3,103,203) wählbar ist, sodass die Menge an Schmiermittel in jeder der beiden Kammern (11,12) veränderbar ist.

13. Vorrichtung nach einem der vorhergehenden Ansprüche, wobei ein Regelungssystem vorgesehen ist, mittels welchem das Schaltorgan (1, 20, 101, 201, 301) derart ansteuerbar ist, sodass aufgrund von Messdaten betreffend den Betriebszustand der Brennkraftmaschine der Zeitpunkt der Öffnung der Verbindung zum Schmiermittelauslass (5,51,52) festlegbar ist.

14. Vorrichtung nach einem der Ansprüche 3 bis 13, wobei das Schaltorgan (1, 20, 101, 201, 301) ein Element zum Verschieben von der ersten Stellung in die zweite Stellung oder umgekehrt umfasst, das ein Umschalten zwischen der ersten und der zweiten Stellung zu einem beliebigen Zeitpunkt erlaubt.

15. Grossdieselmotor, umfassend eine Vorrichtung nach einem der vorhergehenden Ansprüche.
